# EUROPEAN PATENT APPLICATION

(11) **EP 2 219 294 A1**
(43) Date of publication of application: **18.08.2010**
(21) Application number: 09152979.2
(22) Date of filing: 17.02.2009
(51) Int. Cl.: H04B 1/26, H04N 5/44, H04N 5/445

(54) **Tuner to be used in a receiver for receiving a radio frequency signal including a combined data stream signal, and a receiver including such a tuner**

(71) Applicant: NXP B.V., 5656 AG Eindhoven (NL)
(72) Inventor: The designation of the inventor has not yet been filed
(74) Representative: Krott, Michel

(57) **Abstract**

The present invention relates to a tuner to be used in a receiver, said receiver being adapted to receive a radio frequency signal including a combined data stream signal which is composed of a plurality of individual data streams, each individual data stream being associated to a different one of a plurality of channels, wherein said tuner is adapted to have a bandwidth which allows data streams of at least two channels to be passed through.

## Description

### FIELD OF THE INVENTION

The present invention relates to a tuner to be used in a receiver, said receiver being adapted to receive a radio frequency signal including a combined data stream signal which is composed of a plurality of individual data streams, wherein each individual data stream is associated to a different one of a plurality of channels. The present invention further relates to a receiver for receiving a radio frequency signal including a combined data stream signal which is composed of a plurality of individual data streams, each data stream being associated to a different one of a plurality of channels, wherein the receiver includes at least one tuner.

### BACKGROUND OF THE INVENTION

Cable modem applications offer an alternative internet broadband connection over the Digital Subscriber Line (DSL) technology. Cable modems are well known in the prior art and provide access to data stream signals which are transmitted over a cable television (CATV) network by taking advantage of unused bandwidth. The downstream bandwidth of a cable modem usually has a range from about 3Mbps up to about 40Mbps. So, a cable modem which can have additional networking features such as e.g. Voice over IP (VoIP) is a network appliance which enables high speed data connections to the internet via data services provided by a local cable company. Usually, such cable modems are included in Set-Top-Boxes (STB) and television cards for personal computers.

Cable networks transmit digital data signals over radio frequency (RF) carrier signals, wherein usually one carrier signal is provided to carry data in the downstream direction from the cable network to the costumer and another carrier signal is provided to carry data in the upstream direction from the customer to the cable network. The cable modems are located at the customer's premises and convert digital information into a modulated RF signal in the upstream direction and the RF signals to digital information in the downstream direction. Usually, several hundreds of users share a downstream channel and one or more upstream channels.

The Data Over Cable Services Interface Specification (DOCSIS) has become a standard for cable modem applications of the aforementioned kind. The recent DOCSIS specification is called DOCSIS 3.0 which includes a number of improvements. In order to increase the data rates, the DOCSIS 3.0 standard provides a concept of bonding a plurality of physical channels so as to generate a combined data stream signal which is composed of a plurality of individual data streams wherein each said individual data stream belongs to a different one of the aforementioned channels. So, this channel bonding is a load-sharing technique for logically combining a plurality of DOCSIS channels. The DOCSIS 3.0 standard defines the channel bonding for both the upstream and downstream directions.

Usually, the tuner in a cable modem is used with an intermediate frequency (IF) output wherein the center frequency of a wanted channel is in a range of about 36 to 45 MHz, or with a low intermediate frequency output wherein the center frequency for the wanted channel is a range of about 4 to 5 MHz. Zero-IF tuners are not suitable for the above concept, too, since a notch in the middle of the wanted output spectrum would be created because of the required AC (alternating current) coupling and/or DC (direct current) control loops, wherein such a notch results in an unacceptable performance degradation.

US 2008/0089362 A1 and EP 1 830 560 A2 each discloses a receiver which is used in a DOCSIS appliance, wherein this conventional receiver includes several individual tuners for receiving bonded channels.

The use of conventional cable tuners requires the use of a number of tuners in a receiver in accordance with the number of used bonded channels so that the total number of tuners required in a receiver must be equal to the number of the used bonded channels. A typical DOCSIS 3.0 application uses four bonded channels so that the use of existing cable tuners requires the use of a total of four tuners. Although the cable provider can position the bonded channels in pairs of adjacent channels, such a concept does not have any benefit with respect to costs and/or power consumption.

### SUMMARY OF THE INVENTION

It is an object of the present invention to provide a new concept which allows the reduction of costs, power consumption and/or used board space.

In order to achieve the above and further objects, in accordance with a first aspect of the present invention, there is provided a tuner to be used in a receiver, said receiver being adapted to receive a radio frequency signal including a combined data stream signal which is composed of a plurality of individual data streams, each individual data stream being associated to a different one of a plurality of channels, wherein said tuner is adapted to have a bandwidth which allows data streams of at least two channels to be passed through.

In accordance with a second aspect of the present invention, there is provided a receiver for receiving a radio frequency signal including a combined data stream which is composed of a plurality of individual data streams, each data stream being associated to a different one of a plurality of channels, comprising at least one tuner according to the first aspect.

The teaching of the present invention is to broaden the capture bandwidth over a conventional tuner in order to allow data streams of at least two channels to be passed through. So, the present invention results in an implementation of a multi-channel tuner which is able to receive at least two channels and in particular at least two adjacent channels at the same time and, thus, defines a new type of tuner for bonded channels. The implementation of such a multi-channel tuner according to the present invention will significantly reduce costs, power consumption and used board space of multi-channels applications.

With respect thereto, it should be noted that the channels which are selected from the plurality of individual channels to be passed through the tuner may also be called wanted channels.

Further advantageous embodiments of the present invention are defined in the dependent claims.

The passed-through wanted channels may be adjacent channels.

According to an embodiment of the present invention, the plurality channels are bonded channels, wherein the combined data stream signal may be a Data Over Cable Service Interface Specification (DOCSIS) signal or any other channel structure transmitted over cable.

Advantageously, the tuner of the present invention may be adapted to be used in cable modem applications.

A further preferred embodiment of the present invention comprises means for converting the radio frequency signal to a predetermined intermediate frequency signal being lower than the radio frequency, and further comprises a bandwidth adjusting means which is adapted to adjust the capture bandwidth as a multiple of a single channel intermediate frequency bandwidth according to the number of the channels to be passed through. So, in this embodiment, the tuner is used with an intermediate frequency output.

This embodiment, according to one option, allows the architecture for the tuner to be essentially identical to that of a single channel tuner, except for that the intermediate frequency bandwidth has been increased in order to pass the plurality of wanted signals.

The bandwidth adjusting means may comprise a filter means having a bandwidth which is essentially equal to said multiple intermediate frequency bandwidth.

Moreover, the tuner may be adapted so as to have a bandwidth which allows data streams of an even number of wanted channels to be passed through.

According to another option of the aforementioned embodiment, the bandwidth adjusting means is adapted to adjust the intermediate frequency such that the same number of channels is positioned at a negative difference frequency and at a positive different frequency with respect to a predetermined reference signal.

In this embodiment, the bandwidth adjusting means may comprise phase shifting means which is adapted to generate phase-shifted output signals, wherein each output signal includes the data stream of a different one of the wanted channels to be passed-through and has a different phase with respect to the remaining phase-shifted output signals. So, a plurality of branches are generated wherein each branch has a signal of different phase in order to distinguish from the remaining signals.

In particular, if the tuner is adapted so as to have a bandwidth which allows data streams of two adjacent wanted channels to be passed through, the bandwidth adjusting means according to the aforementioned other option is preferably adapted to adjust the intermediate frequency such that one channel is positioned at a negative difference frequency with respect to a reference signal and the other adjacent channel is positioned at a positive difference frequency with respect to said reference signal. According to a preferred modification of this embodiment, the phase shifting means is adapted to generate two phase-shifted output signals, wherein the phase difference between the two phase-shifted output signals is about 90 degrees, wherein for this purpose a complex in-phase/quadrature interface is preferably provided as phase shifting means. So, in this embodiment, an in-phase branch and a quadrature branch are provided in order to distinguish between negative and positive difference frequency, wherein the signal on the quadrature branch is shifted by 90 degrees in phase compared to the in-phase branch.

In a further embodiment of the present invention, a correction means is provided which is adapted to remove phase and/or amplitude errors introduced into the wanted passed-through channels. In particular, such errors occur when using a complex in-phase quadrature interface wherein phase and amplitude errors are introduced by quadrature errors in the interface and due to a mismatch between the in-phase and quadrature branches.

Moreover, preferably a carrier recovery can be provided for each wanted passed-through channel so that each channel and thus each branch has its own carrier recovery, wherein the carrier recoveries should be provided after the aforementioned correction means.

### DETAILED DESCRIPTION OF THE INVENTION

The present invention is further elucidated by the following figures and examples, which are not intended to limit the scope of the invention. The person skilled in the art will understand that various embodiments may be combined.

### BRIEF DESCRIPTION OF THE DRAWINGS

These and other aspects of the invention will be apparent from and elucidated with reference to the embodiment(s) described hereinafter. In the following drawings
Fig. 1 shows a principle block diagram of a conventional concept of a four bonded channels receiver including prior art tuners in a cable modem;
Fig. 2 shows a principle block diagram of a conventional concept of a dual adjacent channels receiver including prior art tuners in a cable modem;
Fig. 3 shows a principle block diagram of a concept of a dual adjacent channels receiver including a tuner with double intermediate frequency bandwidth according to a first preferred embodiment of the present invention in a cable modem;
Fig. 4 is a principle diagram showing a proposed channel location at the intermediate frequency output of a tuner with an I/Q interface according to a second preferred embodiment of the present invention;
Fig. 5 shows a principle block diagram of a concept of a dual adjacent channels receiver including a tuner with an I/Q interface according to the second preferred embodiment of the present invention in a cable modem;
Fig. 6 shows a principle block diagram of a concept of a re-configurable single or dual adjacent channels receiver including a tuner according to a third preferred embodiment; and
Fig. 7 is a graph showing the intermediate frequency spectrum and the filter characterization for a single-channel configuration of a receiver of Figure 9.

### DETAILED DESCRIPTION OF THE DRAWINGS

Multi-tuner applications are used more and more. A typical application is a 'watch and record' feature for set-top-boxes and television cards for personal computers. For increasing data rates in cable modem applications the concept of so-called bonded channels is used, wherein the data streams of a plurality of channels are combined to a single high data rate stream. As already explained in detail above in the introductory part of the specification, the DOCSIS 3.0 standard is dedicated for this kind of applications.

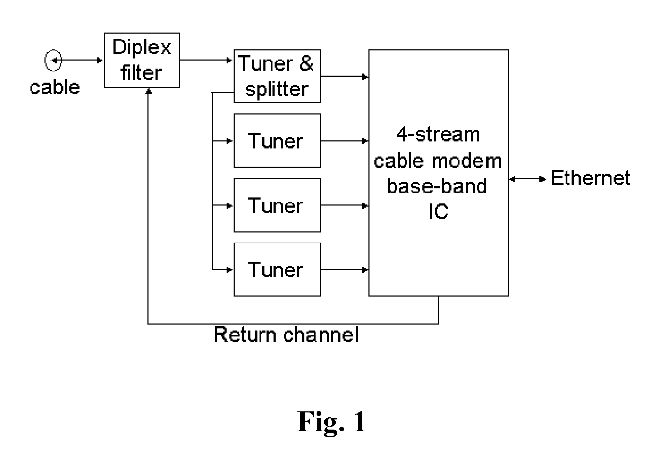

A typical conventional DOCSIS 3.0 application receives four bonded channels. Fig. 1 depicts a principle block diagram of a conventional four adjacent channels receiver as used in a cable modem. A radio frequency (RF) input signal is received from the cable of a television cable network and includes several kinds of signal portions like a video portion, an audio portion and a data stream portion. In the example of figure 1, the RF input signal enters a combined splitter/tuner circuit shown as a block which includes a splitter and a tuner. The splitter separates the data stream portion from other portions of the RF input signal and supplies it to the tuner included in the combined splitter/tuner circuit and to three further tuners so that the output of the splitter is not only connected to the tuner included in the combined splitter/tuner circuit but also to the input of the three other tuners as schematically shown in figure 1. Optionally and not shown in figure 1 a further output of the splitter may go to a television and other cable appliances.

In conventional cable modem applications, the number of tuners used is equal to the number of bonded channels to be processed. So, for processing four bonded channels a total of four tuners are provided as illustrated in figure 1. Each of the tuners selects a wanted channel from the RF input signal and down-converts the wanted channel to an intermediate frequency (IF) signal which again is converted to a digital bit stream output signal. Further, in the example of figure 1, the digital bit stream output of each of the four tuners is fed to a 4-stream cable modem base-band integrated circuit which is provided as a decoder (but can optionally have further functions which are not descriebed here) and is coupled to an ethernet network which connects the cable modem to a personal computer. However, the coupling to the network can be of any other kind (as NoCA, Wifi etc.).

In conventional cable modem applications, there are provided can tuners with an intermediate frequency (IF) output wherein the center frequency for the wanted channel is usually in a range of about 36 to 45 MHz, or a silicon tuner with a low IF output wherein the center frequency for the wanted channel is in a range of about 4 to 5 MHz.

Zero-IF tuners are not suitable for the above concept, since they would create a notch in the middle of the output spectrum of the wanted channel because of the required alternate current (AC) coupling and/or direct current (DC) control loops. Such a notch creates unacceptable performance degradation and is therefore undesired.

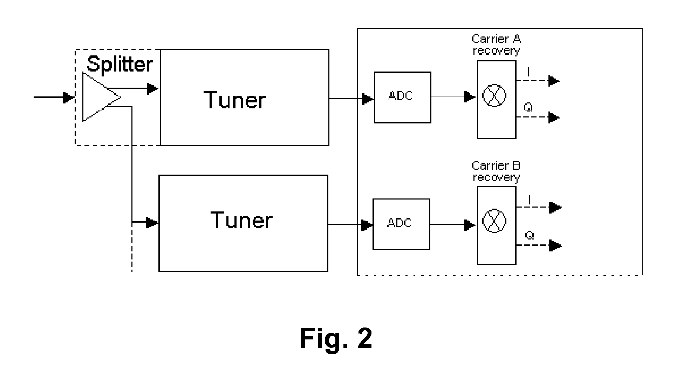

The cable provider can position the bonded channels in pairs of adjacent channels. The concept of a dual adjacent channels receiver including conventional tuners is shown in figure 2 as an example. Whereas in figure 1 the decoder is only shown as a block consisting of a 4-stream cable modem base-band integrated circuit, figure 2 depicts some more details of the decoder as an example. As shown, the output signal of each tuner is fed to an analogue/digital converter ADC which is followed by a carrier recovery. So, each channel includes its own analogue/digital converter and further its own carrier recovery. Moreover, in each channel the carrier recovery is followed by a channel selectivity section which is not illustrated in figure 2.

In should be noted that the splitter can be embodied as a separated component whose outputs are connected to the inputs of the tuners or be integrated with one of the tuners. Wherein figure 1 shows only the second option, both options can be seen from figure 2 by illustrating an optional hatched portion in front of the 'upper' tuner block which means that the shown splitter can be optionally provided either as a separate component outside the 'upper' tuner block or integrated within the 'upper' tuner block.

Apart therefrom a comparison between figures 1 and 2 shows that the concept of figure 2 is identical with the concept of figure 1 so that the positioning of the bonded channels in pairs of adjacent channels does not result in any benefits with respect to costs and/or power consumption.

In order to reduce costs and power consumption, it is proposed to use multi-channel tuners as a new type of tuners which can receive at least two adjacent channels at the same time.

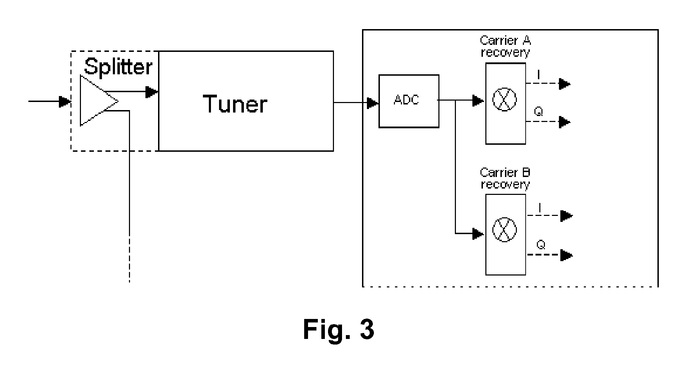

In a first preferred embodiment, the IF-bandwidth of the tuner is doubled, resulting in a concept as illustrated in figure 3. When comparing figure 3 with figure 2 it can be seen that the number of tuners is halved. The architecture for each tuner is identical to a single channel tuner as used in the conventional concepts of figures 1 and 2, except for that the IF bandwidth has been increased in order to pass two adjacent channels. Only the circuitry working with the IF frequency output signals needs to be adapted, as the components working at the much higher radio frequency (RF) already have a sufficient wide bandwidth. For classical can tuners and up-convertible silicon tuners it will result in the use of a filter, in particular a surface acoustic wave (SAW) filter, with double IF bandwidth, preferable 12MHz for the U.S. standard and 14 or 16 MHz for the European standard. For low IF silicon tuners comprising integrated IF filters, the bandwidth of the integrated IF filters only need to be increased accordingly.

The analogue/digital converter ADC following the tuner in the decoder must be able to deal with the higher channel bandwidth and the dynamic range of two channels (more effective number of bits ENOB). So, and in order to prevent aliasing, the ADC must have a higher sample rate accordingly. Alternatively, an analogue/digital conversion with a higher sampling rate can also be realised by using two ADCs which are sampling in turn, each at half the final effective sample rate.

As further seen from figure 3, each channel again has its own channel recovery circuit followed by a channel selectivity section which is not shown.

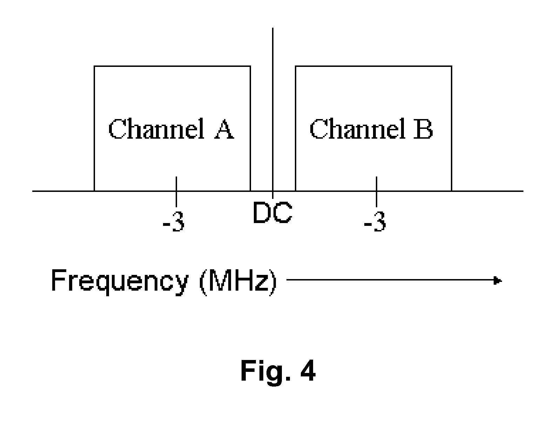

In a second preferred embodiment of the tuner, a complex in-phase/quadrature (I/Q) interface is used. In this embodiment, the IF frequency is adjusted such that one wanted channel is positioned at a negative low-IF frequency while the other adjacent wanted channel is positioned at a positive low-IF frequency. A notch resulting from an AC coupling and/or DC control loops is in between the two wanted channels. The complex output spectrum for a U.S. application is illustrated in figure 4 as an example wherein the center frequencies are +/-3 MHz. A European application uses center frequencies of +/- 3.5 MHz and +/- 4 MHz. With respect thereto, it should be noted that the center frequency essentially indicates half of the channel width.

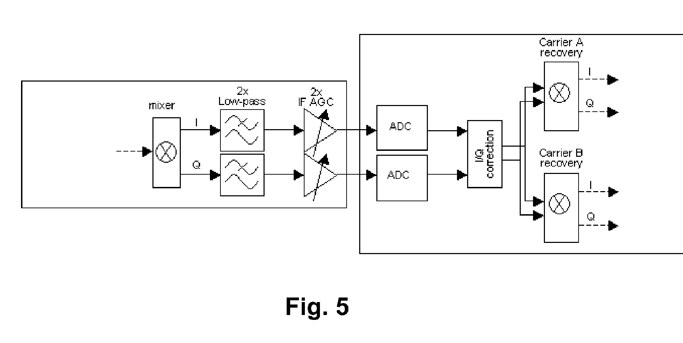

The dual adjacent channels receiver using a tuner architecture according to the aforementioned second preferred embodiment is depicted in figure 5. Due to the provision of the complex I/Q interface an in-phase (I) branch and a quadrature (Q) branch are created in order to distinguish between negative and positive frequencies. The signal at the Q branch is shifted by 90 degrees in phase compared to the signal at the I branch. As further shown in figure 5 a low-pass filter and a controlled gain amplifier following the low-pass filter are provided in both the I and Q branches of the tuner. The cut-off frequency of each the I and Q branch corresponds to the channel width (6 MHz for the U.S. / 7 or 8 MHz for Europe).

The decoder requires to sample both the I and Q branch. This can be done by two separate ADCs, with one ADC being provided in the I branch and the other ADC being provided in the Q branch, as illustrated in figure 5 as an example. Alternatively, a single high speed ADC can be provided which samples in turn the I branch and the Q branch. In the latter case the single high speed ADC must be multiplexed wherein the multiplexing needs to be followed by an interpolator in order to reconstruct the I and Q branches with identical timing.

As further seen from figure 5, the ADCs are followed by an optional I/Q correction unit which removes phase and amplitude errors introduced by quadrature errors in the complex I/Q interface and due to a possible mismatch between the I branch and the Q branch. After correction by the I/Q correction unit, each channel includes its own carrier recovery as shown in figure 5, and the carrier recovery is followed by a channel selectivity section which is not shown.

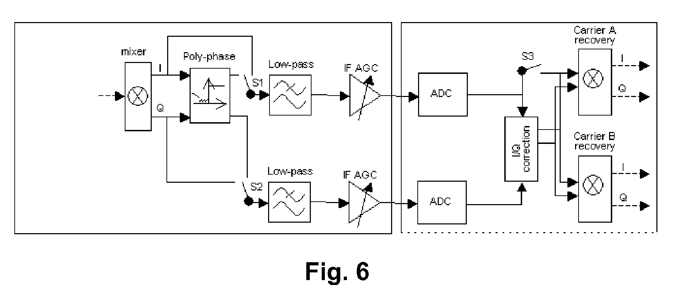

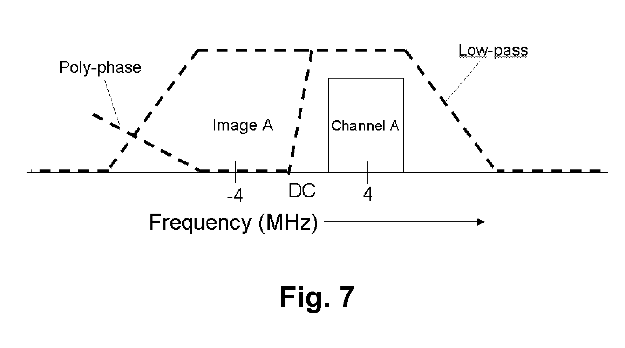

In order to facilitate backwards compatibility between an adjacent channel reception mode and a single channel reception mode an architecture is proposed which is shown in figure 6 as a third preferred embodiment which can also be considered a modification of the second embodiment. One different over the second embodiment of figure 5 is that a poly-phase filter is provided between the complex I/Q interface and the low pass filter. The advantage of the third embodiment is that for a single channel reception mode (according to the DOCSIS 2.0 standard or in case of non-adjacent channels in a DOCSIS 3.0 appliance) some components can be deactivated for saving power, while the poly-phase filter reduces the required dynamic range as the (adjacent) image channel is suppressed as indicated by the graph of figure 7. A further difference over the second embodiment of figure 5 is that the third embodiment comprises three switches S1, S2 and S3 which are provided for switching between the adjacent channel reception mode and the single channel reception mode. For the adjacent channel reception mode, both the switches S1 and S2 are switched so that the poly-phase filter is bridged in each the I and Q branch. For the single channel reception mode the connection via switch S2 is optional and depends on whether the channel decoder requires an I/Q interface or a real IF interface.

The tuner and modem part as described above can be implemented on a single die (SoC). Moreover, it should be noted that the proposal of the present invention can also be extended for receiving three or more adjacent channels, and that it is not necessary that all neighbouring channels are wanted channels.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single ... or other unit may fulfill the functions of several items recited in the claims. The mere fact that certain measures are recited in mutually different dependent claims does not indicate that a combination of these measured cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A tuner to be used in a receiver, said receiver being adapted to receive a radio frequency signal including a combined data stream signal which is composed of a plurality of individual data streams, each individual data stream being associated to a different one of a plurality of channels,
wherein said tuner is adapted to have a bandwidth which allows data streams of at least two channels to be passed through.

2. The tuner according to claim 1, which is adapted so as to have a bandwidth which allows data streams of at least two adjacent channels to be passed through.

3. The tuner according to claim 1 or 2, wherein said plurality of channels are bonded channels.

4. The tuner according to claim 3, wherein said combined data stream signal is a Data Over Cable Service Interface Specification (DOCSIS) signal.

5. The tuner according to at least any one of the preceding claims, which is adapted to be used in cable modem applications.

6. The tuner according to at least any one of the preceding claims, comprising means for converting the radio frequency signal to a predetermined intermediate frequency signal being lower than the radio frequency, and further comprising a bandwidth adjusting means which is adapted to adjust the bandwidth as a multiple of a single channel intermediate frequency bandwidth according to the number of the channels to be passed through.

7. The tuner according to claim 6, wherein said bandwidth adjusting means comprises a filter means having a bandwidth which is essentially equal to said multiple intermediate frequency bandwidth.

8. The tuner according to at least any one of the preceding claims, which is adapted so as to have a bandwidth which allows data streams of an even number of channels to be passed through.

9. The tuner according to claims 6 and 8, wherein said bandwidth adjusting means is adapted to adjust the intermediate frequency such that the same number of channels is positioned at a negative difference frequency and at a positive difference frequency with respect to a predetermined reference signal.

10. The tuner according to at least any one of the claims 6, 7 or 9, wherein said bandwidth adjusting means comprises phase shifting means which is adapted to generate phase-shifted output signals, wherein each output signal includes the data stream of a different one of the channels to be passed through and has a different phase with respect to the remaining phase-shifted output signals.

11. The tuner according to at least any one of the preceding claims, which is adapted so as to have a bandwidth which allows data streams of two adjacent channels to be passed through.

12. The tuner according to claims 9 and 11, wherein said bandwidth adjusting means is adapted to adjust the intermediate frequency such that one channel is positioned at a negative difference frequency with respect to a reference signal and the other adjacent channel is positioned at a positive difference frequency with respect to said reference signal.

13. The tuner according to the claims 10 and 12, wherein said phase shifting means is adapted to generate two phase-shifted output signals, wherein the phase difference between said two phase-shifted output signals is about 90 degrees.

14. The tuner according to claim 13, wherein said phase shifting means is a complex in-phase/quadrature interface.

15. The tuner according to at least any one of the preceding claims, further comprising a correction means which is adapted to remove phase and/or amplitude errors introduced into the passed-through channels.

16. The tuner according to at least any one of the preceding claims, further comprising a carrier recovery for each passed-through channel.

17. The tuner according to claims 15 and 16, wherein said carrier recovery is connected to the output of said correction means.

18. A receiver for receiving a radio frequency signal including a combined data stream which is composed of a plurality of individual data streams, each data stream being associated to a different one of a plurality of channels,
comprising at least one tuner according to at least any one of the preceding claims.
